## Europäisches Patentamt
## European Patent Office
## Office européen des brevets

(19)

(11) Veröffentlichungsnummer: **0 004 402**
**B1**

(12)  # EUROPÄISCHE PATENTSCHRIFT

(45) Veröffentlichungstag der Patentschrift:
06.10.82

(21) Anmeldenummer: 79200130.7

(22) Anmeldetag: 16.03.79

(51) Int. Cl.³: **C 08 L 61/14,** C 08 L 21/00,
C 08 L 11/00, C 09 J 3/12

(54) Verwendung von modifiziertem Novolak als Verstärkerharz für Kunststoffe, Kautschuk oder Kautschuk enthaltende Klebstoffe.

(30) Priorität: 18.03.78 DE 2811956

(43) Veröffentlichungstag der Anmeldung:
03.10.79 Patentblatt 79/20

(45) Bekanntmachung des Hinweises auf die Patenterteilung:
06.10.82 Patentblatt 82/40

(84) Benannte Vertragsstaaten:
BE CH DE FR GB IT NL SE

(56) Entgegenhaltungen:
BE-A-638 524
DE-C-701 134
DE-C-883 649
FR-A-755 422
US-A-2 456 358
US-A-4 025 473

Die Akte enthält technische Angaben, die nach dem Eingang der Anmeldung eingereicht wurden und die nicht in dieser Patentschrift enthalten sind.

(73) Patentinhaber: **HOECHST AKTIENGESELLSCHAFT,**
**Postfach 80 03 20, D-6230 Frankfurt/Main 80 (DE)**

(72) Erfinder: **Hesse, Wolfgang, Pfingstbornstrasse 83,**
**D-6200 Wiesbaden (DE)**

## Verwendung von modifiziertem Novolak als Verstärkerharz für Kunststoffe, Kautschuk oder Kautschuk enthaltende Klebstoffe

Es ist bekannt, carboxylhaltige Novolake durch Umsetzung von Novolaken mit Halogenalkansäure, besonders Chloressigsäure, durch eine Wiiliamson-Synthese herzustellen. Dieses Verfahren ist in die Technik eingeführt, bietet aber folgende Nachteile: Natriumchlorid entsteht als Nebenprodukt und muß entfernt werden. Die Reaktion erfolgt am phenolischen Hydroxyl; dadurch werden das Verhalten der Reaktionsprodukte gegenüber Formaldehyd verändert und Härtungsreaktionen beeinträchtigt. Diese erfolgen nur unvollständig oder überhaupt nicht, wenn die phenolische Hydroxylgruppe durch Alkylsubstitution am Kern sterisch gehindert ist. Das ist besonders bei solchen Novolaken der Fall, die durch Reaktionen nach Friedel-Crafts alkyliert wurden.

Ferner ist es bekannt, Phenolharze durch Umsetzung mit maleinisierten trocknenden oder halbtrocknenden Ölen bei erhöhter Temperatur zu modifizieren. Diese Produkte haben jedoch den Nachteil, daß sie nicht in jedem Fall genügend wasserlöslich sind.

Ferner ist die Umsetzung von Polyphenolen, insbesondere Phenolnovolaken, mit gesättigten oder ungesättigten Carbonsäuren, ungesättigten Fettsäuren, Malein- oder Fumarsäure unter Verwendung von Borsäure oder deren Anhydrid bekannt. Hierbei werden die Säuren unter Esterbildung eingebaut. Eine Addition über ihre etwaigen Doppelbindungen findet nicht statt.

Demgegenüber betrifft die vorliegende Erfindung die Verwendung eines mit olefinisch-ungesättigter Polycarbonsäurekomponente modifizierten Novolaks in Form eines Anlagerungsproduktes, in dem die Polycarbonsäurekomponente über eine C-C-Bindung angelagert worden ist, als Verstärkerharz für Kunststoffe, Kautschuk oder Kautschuk enthaltende Klebstoffe, die natürlichen oder synthetischen Kautschuk, insbesondere Polychlorbutadien enthalten. Unter »Polycarbonsäurekomponente« sind die freie Säure und deren Anhydrid zu verstehen. Bei der erfindungsgemäßen Verwendung treten die oben genannten Nachteile nicht auf.

Als Säurekomponente dienen beispielsweise Fumarsäure, Itaconsäure oder dergleichen und insbesondere Maleinsäure und Maleinsäureanhydrid. Voraussetzung ist, daß die Säuren bei der Anlagerung keine oder nur unwesentliche Selbstpolymerisation eingehen.

Als Novolake in den Anlagerungsprodukten können alle aus phenolischen Körpern und Oxoverbindungen hergestellten Polyalkylidenphenole dienen. Beispielsweise sind das Novolake, die aus Phenol und Formaldehyd in Gegenwart von Säuren kondensiert werden. Niedrig-molekulare Novolake, wie Diphenylolmethan oder 2,2-Diphenylolpropan können auch verwendet werden. Auch in Gegenwart von Alkalien oder Erdalkalien hergestellte Novolake aus Phenol und Formaldehyd, zum Beispiel solche mit vorwiegender o-Struktur, lassen sich als Basis für diese Anlagerungsprodukte heranziehen. Die Novolake können an geeigneten C-Atomen in o- und/oder p-Stellung vollständig oder partiell alkyliert sein. Novolake aus p- oder o-Alkyl- bzw. Arylphenolen und Formaldehyd lassen sich ebenso heranziehen wie alkylierte Novolake, die z. B. durch nachträgliche Umsetzung von nichtsubstituierten Novolaken mit ungesättigten Kohlenwasserstoffen hergestellt worden sind. Es lassen sich auch Novolake verwenden, die aliphatisch ungesättigte Gruppen enthalten, wenn man auf diese Gruppierungen aus anderen Gründen, z. B. zur Verbesserung von Löslichkeit oder Verträglichkeit, Wert legt. Überraschenderweise können erfindungsgemäß auch Anlagerungsprodukte von vollständig alkylierten Novolaken ersetzt werden.

Die erfindungsgemäß verwendeten modifizierten Novolake können vorzugsweise in der Schmelze, im allgemeinen zwischen 100 und 280, vorzugsweise zwischen 170 und 240° C hergestellt werden. Die Bestimmung des Endpunktes kann dabei geschehen, indem man die Viskosität, den Schmelzpunkt oder den Anteil an nichtflüchtigen Bestandteilen durch eine Bestimmung des Rückstands, das heißt des Quotienten aus Einwaage und Auswaage in %, zum Beispiel bei 170° C auf übliche Weise mißt. Im allgemeinen stellt die ungesättigte Polycarbonsäure bzw. deren Anhydrid die einzige bei der Umsetzung in der Schmelze flüchtige Komponente dar, so daß sich der Reaktionsverlauf durch die Rückstandsbestimmung ohne weiteres verfolgen läßt. In der Regel wird die Reaktion abgebrochen, wenn der Rückstand zeigt, daß 80 bis 100%, vorzugsweise 90 bis 100% der eingesetzten ungesättigten Polycarbonsäurekomponente reagiert haben. Es ist auch möglich, die Umsetzung in Gegenwart von Lösungsmitteln mit einem Siedepunkt über der Reaktionstemperatur, zum Beispiel über 180° C durchzuführen. Geeignete Lösungsmittel sind beispielsweise Diäthylbenzol, hochsiedende aliphatische Kohlenwasserstoff-Fraktionen, Naphthalin oder dergleichen.

Bei der Herstellung der erfindungsgemäß verwendeten modifizierten Novolake bilden sich unverseifbare C-C-Bindungen, jedoch können Ester- oder Halbestergruppierungen vorübergehend oder zusätzlich entstehen. Die Anwesenheit von aliphatischen Doppelbindungen im Novolak ist für die Reaktion nicht erforderlich. Allerdings stört sie auch nicht.

Zweckmäßig wird gemäß der Erfindung ein Novolak eingesetzt, der während oder nach seiner Herstellung mit einer olefinisch ungesättigten Polycarbonsäure bzw. deren Anhydrid in Abwesenheit eines Katalysators bei erhöhter Temperatur umgesetzt worden ist.

Nach einer Ausführungsform der Erfindung wird ein Novolak eingesetzt, in dem das Verhältnis der Anzahl der phenolischen Hydroxylgruppen vom Novolak zur Molzahl der Polycarbonsäurekomponente im allgemeinen 1 : (0,05 bis 2), vorzugsweise 1 : (0,1 bis 1,5) beträgt, wobei der obere Bereich vor allem für öl- bzw. fettsäuremodifizierte Novolake gilt.

Nach einer weiteren Ausführungsform der Erfindung kann der Novolak zusätzlich, vorzugsweise vor der Umsetzung mit der ungesättigten Polycarbonsäurekomponente, mit einem vorzugsweise konjugierten Dien modifiziert worden sein. Geeignete konjugierte und nichtkonjugierte Diene sind zum Beispiel Butadien, Isopren, Piperylen, Chloropren, Pentadien, Cyclopentadien oder dieses abspaltende Verbindungen, wie Dicyclopentadien, vorzugsweise Isopren und Divinylbenzol. Im allgemeinen beträgt das Verhältnis zwischen den phenolischen OH-Gruppen des Novolaks und Molen Dien 1 : (0,05 – 1), vorzugsweise 1 : (0,1 bis 1).

Die zusätzlich mit Dien modifizierten Novolake besitzen eine verbesserte Löslichkeit und Verträglichkeit mit polaren Stoffen, wie Lösungsmitteln und Polymeren, insbesondere Kautschuk.

Gegebenenfalls lassen sich erfindungsgemäß auch solche modifizierten Novolake verwenden, die durch Umsetzung mit geeigneten Verbindungen, wie Ammoniak, Aminen, Alkali- oder Erdalkalisalzen zu den entsprechenden Salzen umgewandelt worden sind.

Erfindungsgemäß können sowohl solche modifizierten Novolake verwendet werden, die in o- oder p-Stellung zur phenolischen Hydroxylgruppe keine oder nur wenig Wasserstoffatome enthalten, also »voll alkyliert« sind, als auch solche, die in o- oder p-Stellung zur phenolischen Hydroxylgruppe noch ausreichend Wasserstoffatome besitzen, die also teilweise oder nicht alkyliert sind. Solche modifizierten Novolake lassen sich nur in Gegenwart geeigneter Substanzen, wie Formaldehyd, Hexamethylentetramin, ferner Phenolresolen, Melaminharzen oder dergleichen und/oder durch Zugabe von Säuren, jeweils einzeln oder im Gemisch bei erhöhter Temperatur, zum Beispiel bei 120 bis 220°C, im allgemeinen bei 150 bis 180°C härten. Es ist auch möglich, diese Gruppe der Produkte bei gewöhnlicher Temperatur durch den Zusatz von Säure zu härten. Die Härtungsbedingungen sind also wesentlich günstiger als bei üblichen Novolaken. In manchen Fällen kann die Härtung auch kurzfristig bei einer Temperatur von über 220°C durchgeführt werden.

Die erfindungsgemäß verwendeten Novolake stellen feste Harze mit einem gegenüber dem Ausgangsnovolak erhöhten Schmelzpunkt von etwa 5 bis etwa 30°C dar, die in den meisten polaren und unpolaren Lösungsmitteln löslich sind. Ferner sind sie auch in wäßrigen Lösungen von Ammoniak und Aminen sowie in Alkali, gegebenenfalls auch unter Zusatz von weiteren wasserverträglichen Lösungsmitteln, wie Alkoholen, löslich.

Es ist daher möglich, daß die modifizierten Novolake in Form ihrer Salze als wasserlösliche Verstärkerharz-Zusätze auch in wäßrige Kautschuk- oder Kunststoffdispersionen oder -lösungen eingebracht werden. In Klebstoffen auf Basis von Polychlorbutadien beträgt der Gehalt der erfindungsgemäß hergestellten Produkte bevorzugt 5 bis 100 Gew.-%, bezogen auf den anwesenden Polychlorbutadienkautschuk.

Die durch die erfindungsgemäße Verwendung erhaltenen Mischungen sind darüber hinaus z. B. für härtbare Formmassen geeignet.

Es ist bekannt, Polychlorbutadienklebstoffen natürliche oder künstliche Harze zuzusetzen. Sie sollen dort die Klebrigkeit verbessern, die Bindefestigkeiten erhöhen und als Antioxydantien wirken. Außerdem führen sie oft zu einer Verbilligung des Klebstoffes. Die zugesetzten Kunstharze werden unterschieden in reaktive und nichtreaktive, je nachdem, ob sie mit den im Klebstoff stets vorhandenen Metalloxyden reagieren können oder nicht.

Reaktive Harze sind z. B. Naturharzsäuren, wie Kolophonium oder dergleichen, die durch die Säurezahl bzw. Verseifungszahl charakterisiert sind. Sie verbessern die offene Zeit der Klebfilme (=die Zeit zwischen Auftrag des Klebstoffes und Verlust der Klebrigkeit) und erhöhen die Bindefestigkeit. Diese Wirkungen sind jedoch noch verbesserungsbedürftig. Nachteilig an diesen Harzen ist ferner ihre Neigung zu Autoxydation, die auf dem sehr hohen Gehalt an ungesättigten Gruppen beruht und die zur Versprödung des Klebfilms führen kann.

Nichtreaktive Harze sind z. B. Phenolnovolake, besonders alkylierte Phenolnovolake. Diese sind zwar auch sehr gute Antioxydantien; es war jedoch noch mehr als bei den reaktiven Harzen erwünscht, ihre übrigen klebtechnischen Eigenschaften zu verbessern. Diese alkylierten Novolake lassen sich entweder durch Kondensation von Alkylphenolen mit Aldehyd oder durch Alkylierung während oder nach der Kondensation herstellen.

Die Klebstoffe mit den erfindungsgemäß verwendeten Novolaken weisen gegenüber solchen mit nichtmodifizierten Novolaken und gegenüber solchen mit einem Zusatz von Naturharzen entscheidende anwendungstechnische Vorteile auf. Insbesondere ist bei den erfindungsgemäß erhaltenen Klebstoffen die offene Zeit wesentlich verlängert. Ferner ist die für die Qualität der Klebeverbindung entscheidende Bindefestigkeit, insbesondere bei erhöhter Temperatur, wesentlich verbessert. Die Klebstoffe sind ebenso autoxydationsbeständig, wie die aus den alkylierten Phenolnovolaken, zeigen aber durch die Fähigkeit, mit Metalloxyden zu Salzen zu reagieren, wesentlich verbesserte Eigenschaften, z. B. erhöhte Bindefestigkeit, verbesserte offene Zeit, bessere Oxydationsbeständigkeit in der Verklebung, bessere Adhäsion und Kohäsion. Die antioxydative Wirkung der Phenolkomponente ist so stark, daß auch kleinere Mengen von bis zu 10% Naturharz, die sonst Autoxydation bewirken können, anwesend sein dürfen. Das Naturharz kann hierbei als Mischungskomponente vorliegen und/oder in dem modifizierten Novolak chemisch eingebaut sein.

In den folgenden Beispielen sind, wenn nicht anders angegeben, % jeweils Gew.-% und T Gewichtsteile. Die Viskosität wurde, wenn nicht anders angegeben, jeweils in 50%iger Äthylenglykolmonoäthyläther-Lösung bei 20° C ermittelt.

## Herstellung des modifizierten Novolaks

1) In einen Glaskolben, der mit Rührer, Thermometer und Steigrohr versehen ist, werden 49 T Maleinsäureanhydrid und 324 T eines Oktylphenolnovolaks gemeinsam aufgeschmolzen. Der Oktylphenolnovolak wurde durch sauer katalysierte Kondensation von 1 Mol Oktylphenol mit 0,9 Mol Formaldehyd gewonnen und weist einen Schmelzpunkt von 95° C sowie eine Viskosität von 48 mPa · s als 50%ige Lösung in Xylol auf. Die Schmelze wird auf 180° C erhitzt. Innerhalb von 6 Stunden steigt der Schmelzpunkt von 55 auf 90° C. Der Anteil an nicht-flüchtigen Anteilen (Rückstand) steigt von 89% auf 99,3%. Dieser wird bestimmt, indem eine 2 g-Probe des Harzes in eine ebene Blechschale mit 7,5 cm Durchmesser gegeben und 1 Stunde auf 170° C erhitzt wird. Die Viskosität der 50%igen Xyllollösung beträgt 123,5 mPa · s/20° C, der Schmelzpunkt liegt bei 90° C, die Verseifungszahl ist 96,5. Um zu zeigen, daß das Maleinsäureanhydrid mit dem Novolak unter C-C-Verknüpfung reagiert hat, wird ein Teil des Harzes unter den gleichen Bedingungen, unter denen die Bestimmung der Verseifungszahl erfolgt, verseift. Zur Entfernung des eventuell freigesetzten Maleinsäureanhydrids wird die butanolische Lösung des mit Alkali behafteten und wieder angesäuerten Harzes bis zur neutralen Reaktion des Waschwassers mit Wasser gewaschen. Die verbleibende Harzlösung wird eingeengt und erneut eine Verseifungszahl gemessen. Diese beträgt, bezogen auf 100%igen Rückstand, 90.

2) In der oben bezeichneten Apparatur wird eine Schmelze aus 465 T Diphenylolpropan und 196 T Maleinsäureanhydrid 1 Stunde auf 230° C erhitzt. Innerhalb dieses Zeitraumes steigt der Rückstand von 67,8% auf 97,1% an. Die Viskosität des Harzes beträgt 187 mPa · s, der Schmelzpunkt 58° C, die Verseifungszahl 154; nach Auswaschen der wasserlöslichen Anteile sinkt sie auf 99.

3) 200 T eines Phenolnovolaks, der durch Umsetzung von 1 Mol Phenol und 0,2 Mol Formaldehyd in Gegenwart von 1% Magnesiumoxyd (bezogen auf Phenol) hergestellt wurde und der eine Viskosität von 210 mPA · s/20° C (50%ige Lösung in Äthylenglykolmonoäthyläther) aufweist, wird in der im Beispiel 1 geschilderten Apparatur mit 58,8 T Maleinsäureanhydrid bei 190° C umgesetzt. Während der 7 Stunden dauernden Reaktion steigt der Rückstand von 80,6 auf 98,5%; die Verseifungszahl beträgt 242 und 218 nach dem Auswaschen wasserlöslicher Anteile.

4) Aus 10 Mol Phenol, 3 Mol Isopren, 9 Mol Styrol und 8 Mol Formaldehyd wird in Gegenwart von 0,94 T konzentrierter Schwefelsäure gemäß DBP 22 54 379 ein Novolak (Schmelzpunkt 68° C, Viskosität 74 mPa · s/20° C (50%ig in Xylol), Jodzahl 12) hergestellt. 427 T dieses Novolaks sowie 98 T Maleinsäureanhydrid werden in der im Beispiel 1 bezeichneten Apparatur geschmolzen und 8 Stunden bei 220° C gehalten. Dabei steigt der Schmelzpunkt von 58 auf 110° C an. Der Rückstand beträgt am Anfang 88% und am Ende der Reaktion 99,6%. Die Verseifungszahl beträgt 165 und nach Entfernung der wasserlöslichen Anteile aus dem verseiften Harz 97.

5) Aus Phenol, Styrol und Formaldehyd wird in Gegenwart von 0,1% Schwefelsäure (bezogen auf Phenol) nach DE-C 22 54 379 ein Novolak im Molverhältnis Phenol : Styrol : Formaldehyd 1 : 1,4 : 0,7 hergestellt. Zu 1203 T dieses Harzes werden 141 T Maleinsäureanhydrid gegeben. Die Mischung wird bei 232° C 6 Stunden erhitzt. Danach beträgt der Rückstand (1 h/170° C) 99,7%. Die Viskosität des Ausgangsharzes beträgt 20 mPa · s (50%ig in Xylol) und 75 mPa · s/50%ig in Äthylenglykolmonoäthyläther. Nach der Umsetzung mit Maleinsäureanhydrid liegt das Harz mit einem Schmelzpunkt von 60° C und einer Viskosität von 45 mPa · s/20° C (50%ig in Xylol) sowie 100 mPa · s/20° C (50%ig in Äthylenglykolmonoäthyläther) vor.

6) 412 T eines Novolaks, der aus Phenol und Formaldehyd in Gegenwart von Oxalsäure im Molverhältnis 1 : 0,5 kondensiert wurde (Schmelzpunkt 38° C, Viskosität 210 mPa · s/20° C (50%ige Lösung in Äthylenglykolmonoäthyläther)) und 116 g Fumarsäure werden wie in unter 1 aufgeschmolzen und 6 Stunden auf 200° C erhitzt. 1 Stunde nach Versuchsbeginn scheidet sich Wasser ab. Es wird am absteigenden Kühler weitergearbeitet. Zu diesem Zeitpunkt beträgt die Säurezahl des Ansatzes 208. Bei Versuchsende ist der Rückstand auf 99,6% angestiegen. Das Harz weist einen Schmelzpunkt von 86° C sowie eine Viskosität von 1500 mPa · s auf. Die Säurezahl beträgt 101. Die Verseifungszahl beträgt 190 und die Säurezahl 102. Die Verseifungszahl beträgt nach Entfernung der nach der Verseifung wasserlöslichen Säure 146.

7) 412 T des Novolaks aus Beispiel 6 und 116 T Maleinsäure werden wie unter 6 6 Stunden miteinander umgesetzt. Der Rückstand beträgt nach Beendigung der Reaktion 98,1%. Der Schmelzpunkt liegt bei 63° C. Die Viskosität beträgt 575 mPa · s. Die Verseifungszahl beträgt 204. Nach Entfernung der nach Verseifung wasserlöslichen Säureanteile beträgt die Verseifungszahl 153.

8) 412 T des Novolaks aus 6 werden mit 98 T Maleinsäureanhydrid wie unter 7 umgesetzt. Nach 6stündiger Reaktion beträgt der Rückstand 98,7%. Der Schmelzpunkt liegt bei 63° C, die Viskosität beträgt 575 mPa · s. Die Säurezahl beträgt 143, die Verseifungszahl 208. Die Verseifungszahl nach Entfernung der nach Verseifung wasserlöslichen Säureanteile beträgt 149.

9) Vergleichsharze 1a, 4a und 5a. Die Herstellung der Harze 1, 4 und 5 wird wiederholt, aber die Addition von Maleinsäureanhydrid weggelassen. Diese Harze haben folgende Eigenschaften:

Eigenschaften der Vergleichsharze

| Vergl.-Harz | Schmelzpunkt °C | Visk./20°C*) in mPa·s | Verseifungs- zahl | Jodzahl |
|---|---|---|---|---|
| 1 a | 95 | 48 | 0 | — |
| 4 a | 68 | 74 | 1 | 12 |
| 5 a | 54 | 20 | 0 | — |

*) 50%ige Lösung in Xylol.

10) Vergleichsharz 10 V ist ein als Klebharz für Polychlorbutadien handelsübliches Harz in Form eines Polyadduktes aus Phenol und Kolophonium.


Beispiele

Klebstoffherstellung und Prüfung

Unter Mitverwendung der Harze 1, 4 und 5 sowie den Vergleichsharzen 1a, 4a und 5a und 10 V werden 7 Klebstoffe hergestellt. Dazu werden 100 T Polychlorbutadien, 5 T Magnesiumoxyd und 4 T Zinkoxyd sowie 45 T der zu untersuchenden Harze in 400 T Toluol gelöst bzw. suspendiert. Die gebrauchsfertigen Klebstoffe werden die Gebrauchsdauer des Klebfilms nach Aufstreichen auf eine Folie aus Polyäthylenglykolterephthalat, auf die Trennfestigkeit bei der Verklebung von Gummi auf Gummi bei Raum- und erhöhter Temperatur sowie auf die Wärmefestigkeit bei erhöhter Temperatur geprüft. Die Eigenschaften zeigt Tabelle 1.

Mit dem Harz 5 wurden außerdem Klebstoffe mit abweichenden Mengenverhältnissen hergestellt. Auf 100 T Polychlorbutadien wurden jeweils 10, 30 oder 70 T des Novolakes 5 verwendet. Die dabei erhaltenen Eigenschaften zeigt Tabelle 1:

Tabelle 1

| Harz Nr. | Harz- menge | Gebrauchs- dauer h | Trennfestigkeit 23°C*) N·cm⁻¹ | 50°**) | Wärmestand- festigkeit min bei 60°C**) |
|---|---|---|---|---|---|
| 1 | 45 | 8 | 14 | 19 | 9 |
| 4 | 45 | 24 | 13 | 24 | 11 |
| 5 | 45 | 24 | 18 | 23 | 7 |
| 1 aV) | 45 | 0,5 | 12 | 11 | 7 |
| 4 aV) | 45 | 1 | 9 | 11 | 6 |
| 5 aV) | 45 | 3 | 12 | 10 | 6 |
| 10 V) | 45 | 1 | 10 | 10 | 5 |
| 5 | 10 | 1 | 12 | 19 | 2 |
| 5 | 30 | 6 | 14 | 19 | 6 |
| 5 | 70 | 18 | 17 | 27 | 12 |

*) Gemessen 20' nach Herstellung der Verklebung.
**) Gemessen 7 Tage nach Herstellung der Verklebung.
V) Vergleich.

## 0 004 402

### Patentansprüche

1. Verwendung eines mit olefinisch- ungesättigter Polycarbonsäurekomponente modifizierten Novolaks in Form eines Anlagerungsproduktes, in dem die Polycarbonsäurekomponente über eine C-C-Bindung angelagert worden ist, als Verstärkerharz für Kunststoffe, Kautschuk oder Kautschuk enthaltende Klebstoffe.

2. Verwendung nach Anspruch 1, dadurch gekennzeichnet, daß ein Novolak eingesetzt wird, der während oder nach seiner Herstellung mit einer olefinisch ungesättigten Polycarbonsäure bzw. deren Anhydrid in Abwesenheit eines Katalysators bei erhöhter Temperatur umgesetzt worden ist.

3. Verwendung nach Anspruch 1 oder 2, dadurch gekennzeichnet, daß ein Novolak eingesetzt wird, in dem das Verhältnis der phenolischen Hydroxylgruppen zur Molzahl der ungesättigten Polycarbonsäure-Komponente 1 : (0,05 bis 2), vorzugsweise 1 : (0,1 bis 1,5) beträgt.

4. Verwendung nach einem oder mehreren der Ansprüche 1 bis 3, dadurch gekennzeichnet, daß der Novolak zusätzlich, vorzugsweise vor der Umsetzung mit der ungesättigten Polycarbonsäure-Komponente, mit einem vorzugsweise konjugierten Dien modifiziert worden ist.

5. Verwendung nach Anspruch 4, dadurch gekennzeichnet, daß das Dien Isopren oder Divinylbenzol ist.

6. Verwendung nach Anspruch 4 oder 5, dadurch gekennzeichnet, daß das Verhältnis der phenolischen Hydroxylgruppen des Novolaks zu Molen des Diens 1 : (0,05 bis 1), vorzugsweise 1 : (0,1 bis 1) beträgt.

7. Verwendung nach einem oder mehreren der Ansprüche 1 bis 6, dadurch gekennzeichnet, daß ein Novolak eingesetzt wird, der bis zu 10 Gew.-% Naturharz zugemischt und/oder chemisch eingebaut enthält.

8. Verwendung nach einem oder mehreren der Ansprüche 1 bis 7, dadurch gekennzeichnet, daß der Novolak in einem Anteil von 5 bis 100 Gew.-%, bezogen auf den anwesenden Polychlorbutadienkautschuk für einen Klebstoff verwendet wird, der als Kautschuk-Komponente Polychlorbutadien enthält.

### Claims

1. An application of a novolak modified with an olefinically unsaturated polycarboxylic acid component in the form of an addition product wherein the polycarboxylic acid component has been added via a carbon-carbon bond, as a reinforcing resin for plastics, rubber or rubber containing adhesives.

2. An application according to claim 1 characterized in that a novolak is used which has been reacted with an olefinically unsaturated polycarboxylic acid or its anhydride respectively in the absence of a catalyst at an elevated temperature during or subsequent to its preparation.

3. An application according to claim 1 or 2, characterized in that the ratio of the phenolic hydroxy groups to the number of mols of the unsaturated polycarboxylic acid component is 1 : (0.05 to 2), preferably 1 : (0.1 to 1.5).

4. An application according to one or more of claims 1 to 3, characterized in that the novolak has been modified additionally, preferably prior to the reaction with the unsaturated polycarboxylic acid component, with a diene, preferably a conjugated diene.

5. An application according to claim 4 characterized in that the diene is isoprene or divinylbenzene.

6. An application according to claim 4 or 5 characterized in that the ratio of the phenolic hydroxy groups of the novolak to the mols of diene is 1 : (0.05 to 1), preferably 1 : (0.1 to 1).

7. An application according to one or more of claims 1 to 6 characterized in that a novolak containing up to 10% by weight of a rosin by blending and/or chemical incorporation is used.

8. An application according to one or more of claims 1 to 7 characterized in that the novolak is used for an adhesive containing polychlorobutadiene as a rubber component in an amount between 5 and 100% by weight, referred to the present polychlorobutadiene rubber.

### Revendications

1. Application d'une novolaque modifiée par une composante acide polycarboxylique à insaturation éthylénique, sous la forme d'un produit d'addition dans lequel la composante acide polycarboxylique est fixée par une liaison du type C-C, comme résine de renforcement pour matières plastiques, caoutchouc ou colles contenant du caoutchouc.

2. Application selon la revendication 1, caractérisée en ce qu'on utilise une novolaque que l'on a fait réagir, pendant ou après sa préparation, avec un acide polycarboxylique éthylénique ou son anhydride, en l'absence d'un catalyseur, à température élevée.

3. Application selon l'une des revendications 1 et 2, caractérisée en ce qu'on utilise une novolaque

6

dans laquelle le rapport du nombre des groupes hydroxy phénoliques au nombre de moles de la composante acide polycarboxylique insaturé est compris entre 1 : 0,05 et 1 : 2, de préférence entre 1 : 0,1 et 1 : 1,5.

4. Application selon l'une quelconque des revendications 1 à 3, caractérisée en ce qu'on a fait subir à la novolaque une modification supplémentaire, de préférence avant la réaction avec la composante acide carboxylique insaturé, en la faisant réagir avec un diène, de préférence un diène conjugué.

5. Application selon la revendication 4, caractérisée en ce que le diène est l'isoprène ou le divinylbenzène.

6. Application selon l'une des revendications 4 et 5, caractérisée en ce que le rapport du nombre des groupes hydroxy phénoliques de la novolaque au nombre de moles du diène est compris entre 1 : 0,05 et 1 : 1, de préférence entre 1 : 0,1 et 1 : 1.

7. Application selon l'une quelconque des revendications 1 à 6, caractérisée en ce qu'on utilise une novolaque qui contient jusqu'à 10% en poids d'une résine naturelle qui est simplement mélangée et/ou incorporée chimiquement.

8. Application selon l'une quelconque des revendications 1 à 7, caractérisée en ce que la novolaque est utilisée pour une colle contenant du polychlorobutadiène comme composante caoutchouc, en une proportion de 5 à 100% en poids par rapport au caoutchouc de polychlorobutadiène.